# EUROPEAN PATENT APPLICATION

(11) **EP 4 019 904 A2**
(43) Date of publication of application: **29.06.2022**
(21) Application number: 21198506.4
(22) Date of filing: 23.09.2021
(51) Int. Cl.: G01C 21/34, G06Q 10/06

(54) **JUST-IN-TIME CONVEYANCE DELIVERY**

(30) Priority: 22.12.2020 US 202017131454
(71) Applicant: Intel Corporation, Santa Clara, CA 95054 (US)
(72) Inventor: FOX, Maik, 76287 Rheinstetten (DE); POHL, Daniel, 91093 Heßdorf (DE)
(74) Representative: 2SPL Patentanwälte PartG mbB

(57) **Abstract**

System and techniques for just-in-time conveyance delivery are described herein. A multi-mode route may be communicated to a first user. Here, the multi-mode route starts with a first mode and includes a leg with a second mode. A conveyance is secured for the leg of the multi-mode route with the second mode by continually identifying a route for a second user using a conveyance of the second mode and modifying the route for the second user based on an endpoint of the leg of the multi-mode route with the second mode. Use of the conveyance may be communicated to the first user for the leg of the multi-mode route with the second mode once the conveyance is secured.

## Description

### TECHNICAL FIELD

Embodiments described herein generally relate to automated vehicle control and more specifically to just-in-time conveyance delivery.

### BACKGROUND

Automated vehicles include technologies to perform autonomous or semi-autonomous travel, often referred to as "self-driving" or "assisted-driving" in reference to automobiles. These systems use an array of sensors to continuously observe the vehicle's motion and surroundings. A variety of sensor technologies may be used to observe the vehicle's surroundings, such as the road surface and boundaries, other vehicles, pedestrians, objects and hazards, signal objects (e.g., signage or road markings), and other relevant items. Automated vehicles also generally include processing circuitry to process the sensor data and may include actuators to control of a vehicle.

Mobility-as-a-Service (MaaS) is a concept whereby vehicles are managed and provided to transport passengers. MaaS generally involves using fleets of automated vehicles to provide the passenger transportation. Such automated vehicles generally use sensors and control hardware to reduce or eliminate the need for a human driver or pilot of the vehicle. An MaaS system generally includes an interaction between the service and the user through an app (e.g., mobile phone application) and a network. The network also generally connects the MaaS vehicles to each other, route planning services, or other hardware to enable a robot taxi (robotaxi) service or the like.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates an example scenario for just-in-time conveyance delivery, according to an embodiment.
FIG. 2 illustrates a timing convergence between travelers, according to an embodiment.
FIG. 3 illustrates an example of a procedure for just-in-time conveyance delivery, according to an embodiment.
FIG. 4 illustrates components of a system to implement just-in-time conveyance delivery, according to an embodiment.
FIG. 5 illustrates a flow diagram of an example of a method for just-in-time conveyance delivery, according to an embodiment.
FIG. 6 is a block diagram illustrating an example of a machine upon which one or more embodiments may be implemented.

### DETAILED DESCRIPTION

Multimodal trip planning involves routes with legs of varying modes, such as walking, busses, trains, tram trains, ferries, ships, taxis and ride-hailing (traditional or autonomous), subways, long distance busses, shared bikes, shared e-scooters, aircraft, and so on. Some of these modes involve conveyances, such as a scooter, automobile, or aircraft, while other do not, such as walking. Some modes operate on a schedule and are used by many passengers at once, giving high confidence in their availability for multi-mode route planning. However, several modern modes of transportation are specific to an individual (e.g., a bicycle) or a small group of people (e.g., a car or a plane) and require a dedicated conveyance (e.g., or other resource) to be available for legs (e.g., segments) of the route.

MaaS, or other, multimodal trip planning applications (e.g., apps, mobile device applications, etc.) usually include a ticket or reservation booking option to coordinate conveyance allocations among users. These apps are used widely to aggregate transportation modes and implement planning and booking to optimize individual travel. A challenge includes maximizing conveyance utilization such that the fewest number of conveyances are used to provide timely service to users.

There are several techniques that may be used to coordinate conveyance allocation while attempting to minimize time in which a conveyance is used by no user (e.g., downtime). For example, the MaaS application may immediately book available conveyances at the start of the trip. This approach is feasible when the conveyance is already available at the location needed (e.g., route leg endpoint) and the operator of the conveyance accepts the reservation time frame or early booking. Pre-reservation is often practiced in order to ensure that the user is satisfied with the multi-mode route. However, this technique has a number of drawbacks, such as requiring a large number of conveyances in a MaaS network to address overlapping user requests, and a possibly large amount of time in which the conveyance are not in use, but rather "waiting" for the user to arrive.

The following example techniques may be employed to address traditional reservation of conveyances in a multi-mode route. For example, an operator may incentivize (e.g., pay, offer discounts, etc.) users to deliver conveyances to certain locations at certain times. In effect, users are not only passengers or operators of conveyances, but also "employees" stocking conveyances where they are useful.

In an example, a MaaS service may schedule a transport operator to relocate vehicles—this may be done otherwise to distribute the conveyances over a city, for example—fitting to a multi-mode route schedule of one or more passengers. This technique may result in better conveyance utilization, but suffers from additional labor costs and logistics over reserving conveyances at the beginning of the route.

In an example, the multi-mode route may be created to restrict available modes that enable conveyances to be user throughout the route. For example, taking an electric scooter on a train or ferry and using the scooter at the destination. This eliminates some concern with placing the conveyance mid-way through a route, but underutilizes conveyances, may be inconvenient for the user, and restricts available modes for various legs of the multi-mode route.

Just-in-time (JIT) conveyance delivery may be used to address the issues noted above. JIT conveyance delivery uses concurrent and continuous multi-mode routing for several users to coordinate conveyance delivery between legs of multi-mode routes. Here, concurrent routing entails overlapping routes using the same conveyances at different times, and continuous routing involves an iterative process by which routes may be updated in response to tracking information about conveyances. This is not a conveyance waitlist. Rather, the multi-mode route legs of multiple users are planned, and updated after they have begun, to coordinate between the several users. Thus, routes may be started even when conveyances are not yet available for users when the conveyances are used at later legs of the multi-mode route. JIT conveyance delivery optimizes planning over multiple users' trips happening at the same time.

For example, a trip for Mary may be planned on purpose to intercept Sue and hand over a conveyance at a location that is beneficial (or at least acceptable) to both Mary and Sue. In an example, Mary's route may change over the length of Sue's trip—such as Mary diverting to the office to address an unexpected emergency—and another customer, Sven, is chosen to intercept Sue's trip and deliver a conveyance. In an example, a customer receives real-time updates of expected wait times once the customer has arrived at the meeting point. In an example, when a conveyance is not available, the multi-mode route may have a leg inserted or modified to include the user conveying themselves (e.g., walking) to another location. Additional details and examples are described below.

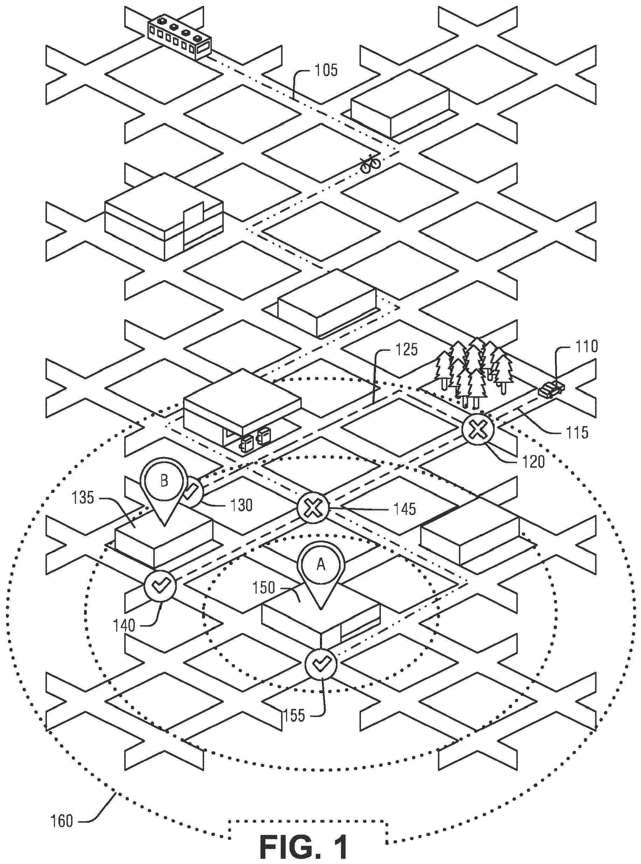

FIG. 1 illustrates an example scenario for just-in-time conveyance delivery, according to an embodiment. As illustrated, customer A is traveling on a multi-mode route 105 that includes a train leg, a bicycle leg, and an automobile leg, ending at destination A 150. Customer B is traveling on a multi-mode route 115, starting in a conveyance 110 (automobile), that also includes a bicycle leg on the way to destination B 135.

The multi-mode routing is performed by computer hardware, such as a centralized service (e.g., a cloud service), a distributed service (e.g., edge servers or devices, vehicle-to-anything (V2X) networks, mesh networks, collaboration among mobile devices of users, etc.), or a combination of the two. The computer hardware includes processing circuitry configured to communicate the multi-mode route 105 to a first user (customer A). Here the multi-mode route 105 starts with a first mode (e.g., train) and includes a leg with a second mode (e.g., automobile). In an example, the second mode is conveyances (e.g., automobiles generally) with a variable routing capability. Variable routing capability means that the conveyance may be routed over several paths. Thus, trains generally do not have variable routing capabilities, while scooters and automobiles do have variable routing capabilities. In an example, conveyances of the second mode are one of an automobile, a human-powered vehicle, or an aircraft.

In an example, the processing circuitry is configured to communicate to the first user before a conveyance of the conveyances (e.g., the car from known cars) is available. Thus, the processing circuitry is configured to start the route 105 before the automobile 110 is available for customer A to use.

The processing circuitry is configured to secure the conveyance 110 for the leg of the multi-mode route with the second mode in a continuous manner. The entails continually monitoring conveyance use by other users and updating available routes so that conveyances and users intersect in space and time.

As part of the continuous securing of conveyances, the processing circuitry is configured to identify second user (e.g., customer B) using a conveyance (automobile 110) of the second mode. In an example, identifying the route includes identifying a set of routes for other users based on a radius 160 established about the endpoint (e.g., endpoint 155) of the leg of the multi-mode route with the second mode. In an example, the size of the radius is based on an expected time period remaining before the first user approaches the endpoint of the leg of the multi-mode route with the second mode. The radius 160 thus changes in size based on how long it will take customer A to get to endpoint 155. The radius acts as a filter to reduce the number of other routes that are considered when attempting to find the conveyance.

In an example, the set of routes are ordered based on a distance between respective endpoints of members in the set of routes and the endpoint of the leg of the multi-mode route with the second mode. Customer B's route 115 has an endpoint 140. Consider the alternative route 125 with endpoint 130 for customer B. In this example, route 115 is ordered higher (e.g., more importantly or selected before) route 125 because endpoint 140 is closer to endpoint 155 than endpoint 130. In an example, the distance is measured in a multidimensional space that includes time as a dimension. This technique enables Euclidean geometry, and related optimization, to be used to determine which of several options are available reduced to a single scalar value (e.g., distance between points). By adding the time dimension, a ready balance between the conveyance being physical close to the desired hand off point, temporally close to the hand off time, may be achieved. If time is more important than distance a weighting may be applied to the time dimension to account for this. Further, nonlinear weighting may be used, for example, in space, to address common walking tolerances of individuals, for example.

After the second user is identified, as part of the continuous conveyance acquisition, the processing circuitry is configured to modify the route (e.g., route 115) for the second user (e.g., customer B) based on the endpoint (endpoint 155) of the leg of the multi-mode route with the second mode. As illustrated, the route 115 is changed at crossing 120 into route 125, or a stop at crossing 145 (between route 105 and route 115) is made in which the first user takes over the vehicle 110 and carries the second user to the endpoint 140 before continuing on to endpoint 155. In any case, the route of the second user is modified to more closely coincide with the route of the first user. This may not be one-way; the route of the first user also being modified.

In an example, modifying the route for the second user includes modifying graph weights of route options towards the endpoint of the leg of the multi-mode route with the second mode such that it is more likely the route options are taken. This example operates on common graph traversal techniques for route planning. Generally a graph edge will have a weight between two nodes. The weight may be time to traverse to corners. Here, the modification puts a thumb on the scale, artificially modifying the weight to increase the likelihood that routing facilities move the second user towards the first user in space-time. In this manner, standard map routing facilities may be used to implement JIT conveyance delivery.

In an example, modifying the route for the second user places the conveyance at a point different than the endpoint of the leg of the multi-mode route with the second mode. In this example, an alternative drop-off point for the conveyance is given. Consider the two endpoints, endpoint 130 and endpoint 140 with respect to customer B's destination, destination B 135. Both endpoints appear to have the same relative position (e.g., distance from the destination B 135), and thus should be equally convenient for customer B. However, endpoint 140 is demonstrably closer to the endpoint 155 of customer A. Thus, the destination of the route 125 may be changed to the endpoint 140 to coordinate handover of the vehicle 110.

In an example, the processing circuitry is configured to modify the multi-mode route to include or update a third leg. Here, the third leg directs the first user from the endpoint (e.g., endpoint 155) of the leg of the multi-mode route with the second mode to the point where the conveyance is (e.g., endpoint 140). Thus, the multi-mode route 105 may include an additional leg from endpoint 155 on foot to endpoint 140 where the vehicle 110 is waiting. This insertion or update of the third leg is communicated to the first user.

After the conveyance is secured, the processing circuitry is configured to communicate to the first user that the first user is to use the conveyance for the leg of the multi-mode route with the second mode.

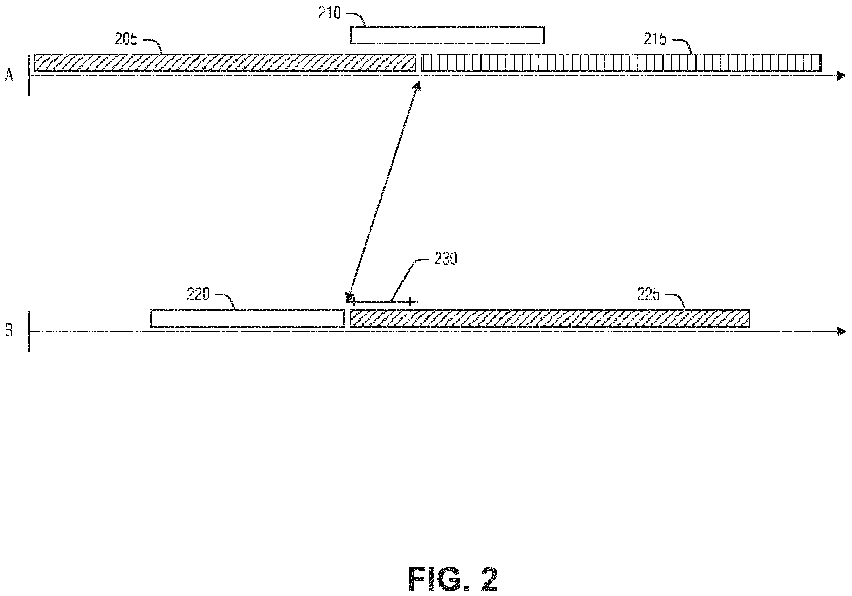

FIG. 2 illustrates a timing convergence between travelers, according to an embodiment. The rectangles indicate use of a conveyance mode (e.g., a leg of a trip), the horizontal coordinate is time, and user A is represented above user B. Like shading in a rectangle indicates like conveyances. Thus, for user A to hand over a car being driven in leg 205 to user B, the leg 205 needs to end.

As illustrated, user B walks (leg 220) and then drives (leg 225) as part of user B's route. User A drives (e.g., 205) and then rides a train (leg 215). Note that there is a distance 230 (e.g., space, time, or both) between the end of leg 205 and the beginning of leg 225. To address this issue, the route of user A may be modified to include an additional leg 210, in which user A ends the leg 205 early and catches the train (leg 215) later. This is an example of a route modification that would not have occurred without the attempt to match a vehicle for leg 225 of user B.

In an example, the third leg is not communicated to the first user, but rather given to the conveyance. Thus, for example, an autonomous vehicle may pilot itself from endpoint 140 to endpoint 155. In this example, the third leg may be used to relocate conveyances when not in use to be more convenient for other users.

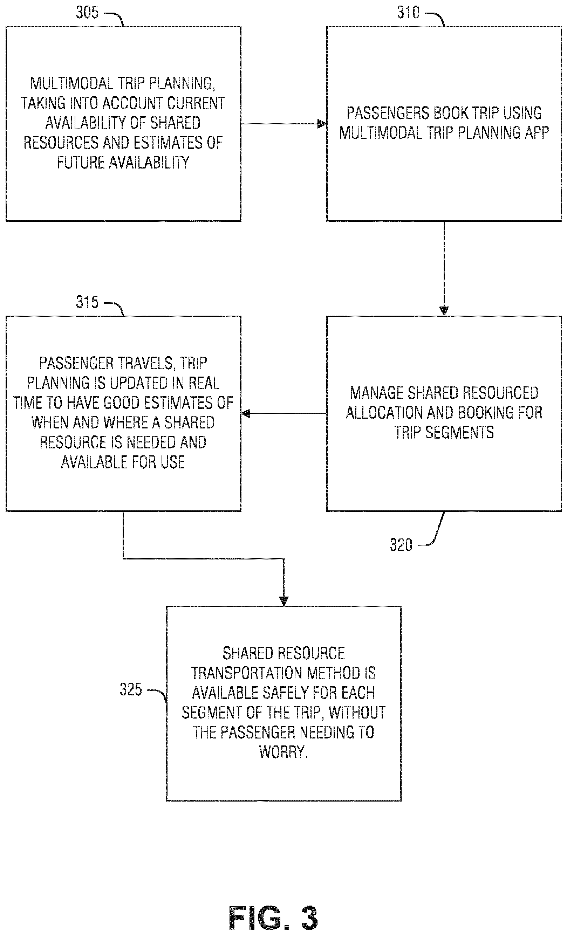

FIG. 3 illustrates an example of a procedure for just-in-time conveyance delivery, according to an embodiment. First, modern multimodal trip planning is not limited to trains, busses, or walking anymore. Ride-hailing services, rental bikes or e-scooters, robotaxis, automated ferry drones, etc. are becoming available to optimize travel times and cost. For traditional shared transport modes― such as trains and busses—occupancy in peak times may be an issue, but usually a passenger is able to board the conveyance when arriving at the stop (e.g., bus stop, train station, etc.) on time. For the modern ways of shared resource mobility (e.g., e-scooters, bikes, or ride-hailing), availability for a trip segment is trickier. While the information on e.g., e-scooter availability for a start-of-the-trip segment may be readily available and real-time, there is generally no guarantee that if one exits a train after an hour, an e-scooter is immediately available at the train stop without tying up the scooter with a reservation while the user is on the train.

In general, the procedure starts with a user planning a multi-mode route 305. With the initial route plotted, it is presented to the user for acceptance. Once accepted, the user books the trip 310 and the multi-mode route begins. As noted above, the multi-mode route may start before conveyances are secured for other legs of the route.

To ensure that a conveyance is available for a subsequent leg of the multi-mode route, the system manages 320 the shared resources (e.g., conveyances) throughout the route execution. As noted above, this management may include identifying users of the desired conveyance and directing those users to a convenient, or equitable, handoff point. As this is a dynamic process, the system updates 315 the multi-mode route as needed to inform the user as well as place the conveyance in the user's possession 325. This procedure addresses issues with present concurrent multimodal planning approaches, including increasing shared resource utilization.

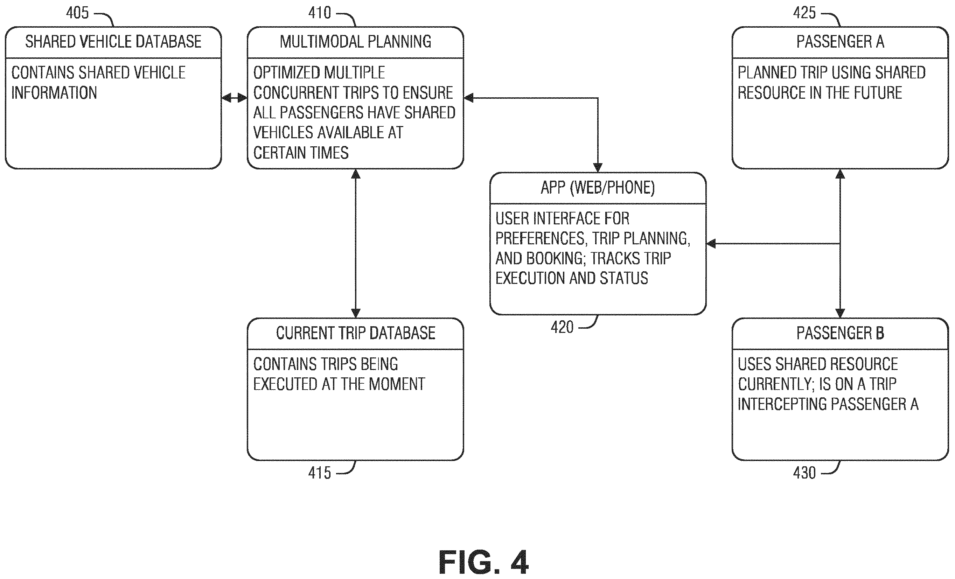

FIG. 4 illustrates components of a system to implement just-in-time conveyance delivery, according to an embodiment. The system includes a shared vehicle database 405 to information the multimodal planning computer 410 of possibly available conveyances. The multimodal planning computer 410 combines information from the shared vehicle database 405 and an application interface 420 with passenger A 425 (e.g., a mobile device operated by passenger A) and passenger B 430 to create a multi-mode routes for passenger A 425 and passenger B 430. These multi-mode routes are stored in the current trip database 415.

As the multimodal planning computer 410 modifies routes in the current trip database 415, the modifications are communicated to passenger A 425 and passenger B 430 through the application interface 420. In this manner, passenger A 425 and passenger B 430 are kept apprised of route changes to more effectively use the shared resources of the system.

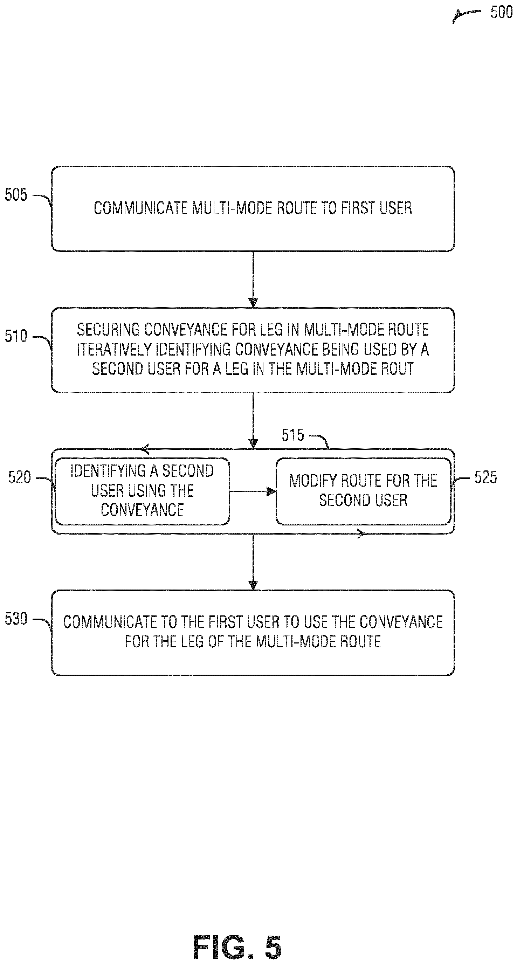

FIG. 5 illustrates a flow diagram of an example of a method 500 for just-in-time conveyance delivery, according to an embodiment. The operations of the method 500 are implemented in computing hardware, such as that described above or below (e.g., processing circuitry).

At operation 505, a multi-mode route is communicated to a first user. Here the multi-mode route starts with a first mode and includes a leg with a second mode. In an example, the second mode is conveyances with a variable routing capability. In an example, conveyances of the second mode are one of an automobile, a human-powered vehicle, or an aircraft. In an example, the method 500 includes an operation to communicate to the first user to begin the multi-mode route before a conveyance of the conveyances (e.g., a car from available cars) is available.

At operation 510, a conveyance is secured for the leg of the multi-mode route with the second mode in a continuous manner. Here, a loop 515 (e.g., iteration, repetition, etc.) is performed to implement the continuous nature of securing the conveyance.

At operation 520, in the loop 515, a route for a second user using a conveyance of the second mode is identified. In an example, identifying the route includes identifying a set of routes for other users based on a radius established about the endpoint of the leg of the multi-mode route with the second mode. In an example, the size of the radius is based on an expected time period remaining before the first user approaches the endpoint of the leg of the multi-mode route with the second mode. In an example, the set of routes are ordered based on a distance between respective endpoints of members in the set of routes and the endpoint of the leg of the multi-mode route with the second mode. In an example, the distance is measured in a multidimensional space that includes time as a dimension.

At operation 525, in the loop 515, the route for the second user is modified based on the endpoint of the leg of the multi-mode route with the second mode. In an example, modifying the route for the second user modifies graph weights of route options towards the endpoint of the leg of the multi-mode route with the second mode such that it is more likely the route options are taken. In an example, modifying the route for the second user places the conveyance at a point different than the endpoint of the leg of the multi-mode route with the second mode.

In an example, the method 500 is extended to include modifying or inserting a third leg of the multi-mode route. In an example, the third leg directs the first user from the endpoint of the leg of the multi-mode route with the second mode to the point where the conveyance is. The method 500 may continue by communicating an update to the multi-mode route to the first user. Here, the update includes the third leg.

At operation 530, communicate to the first user that the first user is to use the conveyance for the leg of the multi-mode route with the second mode.

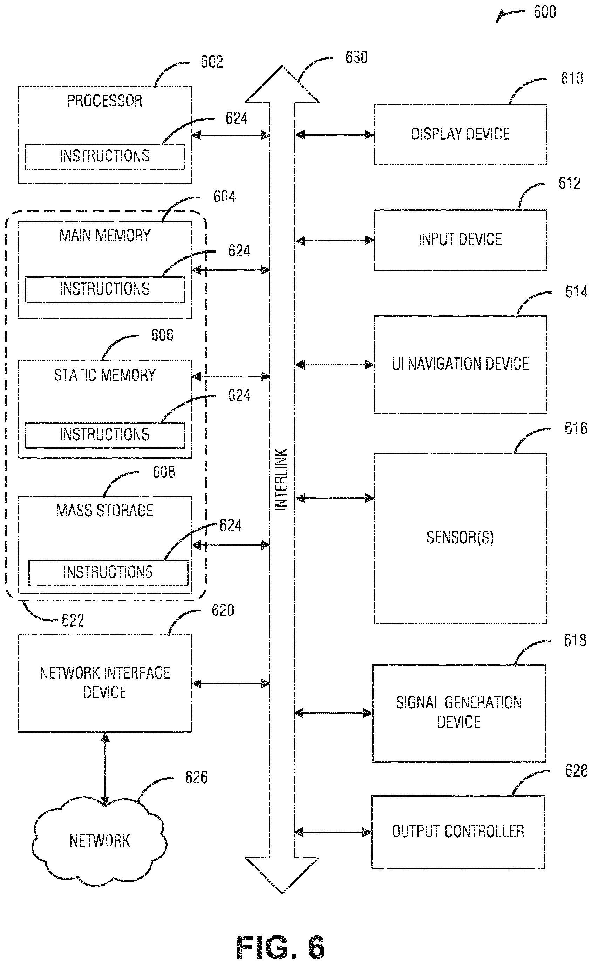

FIG. 6 illustrates a block diagram of an example machine 600 upon which any one or more of the techniques (e.g., methodologies) discussed herein may perform. Examples, as described herein, may include, or may operate by, logic or a number of components, or mechanisms in the machine 600. Circuitry (e.g., processing circuitry) is a collection of circuits implemented in tangible entities of the machine 600 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine-readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine-readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 600 follow.

In alternative embodiments, the machine 600 may operate as a standalone device or may be connected (e.g., networked) to other machines. In a networked deployment, the machine 600 may operate in the capacity of a server machine, a client machine, or both in server-client network environments. In an example, the machine 600 may act as a peer machine in peer-to-peer (P2P) (or other distributed) network environment. The machine 600 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 600 may include a hardware processor 602 (e.g., a central processing unit (CPU), a graphics processing unit (GPU), a hardware processor core, or any combination thereof), a main memory 604, a static memory (e.g., memory or storage for firmware, microcode, a basic-input-output (BIOS), unified extensible firmware interface (UEFI), etc.) 606, and mass storage 608 (e.g., hard drives, tape drives, flash storage, or other block devices) some or all of which may communicate with each other via an interlink (e.g., bus) 630. The machine 600 may further include a display unit 610, an alphanumeric input device 612 (e.g., a keyboard), and a user interface (UI) navigation device 614 (e.g., a mouse). In an example, the display unit 610, input device 612 and UI navigation device 614 may be a touch screen display. The machine 600 may additionally include a storage device (e.g., drive unit) 608, a signal generation device 618 (e.g., a speaker), a network interface device 620, and one or more sensors 616, such as a global positioning system (GPS) sensor, compass, accelerometer, or other sensor. The machine 600 may include an output controller 628, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 602, the main memory 604, the static memory 606, or the mass storage 608 may be, or include, a machine readable medium 622 on which is stored one or more sets of data structures or instructions 624 (e.g., software) embodying or utilized by any one or more of the techniques or functions described herein. The instructions 624 may also reside, completely or at least partially, within any of registers of the processor 602, the main memory 604, the static memory 606, or the mass storage 608 during execution thereof by the machine 600. In an example, one or any combination of the hardware processor 602, the main memory 604, the static memory 606, or the mass storage 608 may constitute the machine readable media 622. While the machine readable medium 622 is illustrated as a single medium, the term "machine readable medium" may include a single medium or multiple media (e.g., a centralized or distributed database, and/or associated caches and servers) configured to store the one or more instructions 624.

The term "machine readable medium" may include any medium that is capable of storing, encoding, or carrying instructions for execution by the machine 600 and that cause the machine 600 to perform any one or more of the techniques of the present disclosure, or that is capable of storing, encoding or carrying data structures used by or associated with such instructions. Non-limiting machine-readable medium examples may include solid-state memories, optical media, magnetic media, and signals (e.g., radio frequency signals, other photon based signals, sound signals, etc.). In an example, a non-transitory machine-readable medium comprises a machine readable medium with a plurality of particles having invariant (e.g., rest) mass, and thus are compositions of matter. Accordingly, non-transitory machine-readable media are machine readable media that do not include transitory propagating signals. Specific examples of non-transitory machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In an example, information stored or otherwise provided on the machine readable medium 622 may be representative of the instructions 624, such as instructions 624 themselves or a format from which the instructions 624 may be derived. This format from which the instructions 624 may be derived may include source code, encoded instructions (e.g., in compressed or encrypted form), packaged instructions (e.g., split into multiple packages), or the like. The information representative of the instructions 624 in the machine readable medium 622 may be processed by processing circuitry into the instructions to implement any of the operations discussed herein. For example, deriving the instructions 624 from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions 624.

In an example, the derivation of the instructions 624 may include assembly, compilation, or interpretation of the information (e.g., by the processing circuitry) to create the instructions 624 from some intermediate or preprocessed format provided by the machine readable medium 622. The information, when provided in multiple parts, may be combined, unpacked, and modified to create the instructions 624. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable etc.) at a local machine, and executed by the local machine.

The instructions 624 may be further transmitted or received over a communications network 626 using a transmission medium via the network interface device 620 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, peer-to-peer (P2P) networks, among others. In an example, the network interface device 620 may include one or more physical jacks (e.g., Ethernet, coaxial, or phone jacks) or one or more antennas to connect to the communications network 626. In an example, the network interface device 620 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 600, and includes digital or analog communications signals or other intangible medium to facilitate communication of such software. A transmission medium is a machine-readable medium.

### Additional Notes & Examples

Example 1 is an apparatus for just-in-time transportation delivery, the apparatus comprising: a memory including instructions; and processing circuitry that, when in operations, is configured by the instructions to: communicate a multi-mode route to a user, the multi-mode route starting with a first mode and including a leg with a second mode, the second mode being conveyances with a variable routing capability; secure a conveyance for the leg of the multi-mode route with the second mode by a continual procedure; communicate to the user to use the conveyance for the leg of the multi-mode route with the second mode.

In Example 2, the subject matter of Example 1 includes, wherein conveyances of the second mode are one of an automobile, a human-powered vehicle, or aircraft.

In Example 3, the subject matter of Examples 1-2 includes, wherein the processing circuitry is configured to communicate to the user to begin the multi-mode route before the conveyance is available.

In Example 4, the subject matter of Examples 1-3 includes, wherein the continual procedure includes iterations, an iteration of the iterations including: identification of a route for a second user using a conveyance of the second mode; and modification of the route for the second user based on an endpoint of the leg of the multi-mode route with the second mode.

In Example 5, the subject matter of Example 4 includes, wherein identification of the route for the second user includes the processing circuitry configured to identify identifying a set of routes for other users based on a radius established about the endpoint of the leg of the multi-mode route with the second mode, a size of the radius based on a expected time period remaining before the user approaches the endpoint of the leg of the multi-mode route with the second mode.

In Example 6, the subject matter of Example 5 includes, wherein the set of routes are ordered based on a distance between respective endpoints of members in the set of routes and the endpoint of the leg of the multi-mode route with the second mode.

In Example 7, the subject matter of Example 6 includes, wherein the distance is measured in a multidimensional space that includes time as a dimension.

In Example 8, the subject matter of Examples 4-7 includes, wherein modification of the route for the second user includes the processing circuitry configured to modify graph weights of route options towards the endpoint of the leg of the multi-mode route with the second mode such that it is more likely the route options are taken.

In Example 9, the subject matter of Examples 4-8 includes, wherein modification of the route for the second user includes the processing circuitry configured to place the conveyance at a point different than the endpoint of the leg of the multi-mode route with the second mode.

In Example 10, the subject matter of Example 9 includes, wherein the processing circuitry is configured to: modify or insert a third leg of the multi-mode route, the third leg directing the user from the endpoint the leg of the multi-mode route with the second mode to the point where the conveyance is; and communicate an update to the multi-mode route to the user, the update including the third leg.

Example 11 is a method for just-in-time transportation delivery, the method comprising: communicating a multi-mode route to a first user, the multi-mode route starting with a first mode and including a leg with a second mode, the second mode being conveyances with a variable routing capability; securing a conveyance for the leg of the multi-mode route with the second mode by continually: identifying a route for a second user using a conveyance of the second mode; and modifying the route for the second user based on an endpoint of the leg of the multi-mode route with the second mode; and communicating to the first user to use the conveyance for the leg of the multi-mode route with the second mode.

In Example 12, the subject matter of Example 11 includes, wherein conveyances of the second mode are one of an automobile, a scooter, a human-powered vehicle, or aircraft.

In Example 13, the subject matter of Examples 11-12 includes, communicating to the first user to begin the multi-mode route before the conveyance is available.

In Example 14, the subject matter of Examples 11-13 includes, wherein identifying the route for the second user includes: identifying a set of routes for other users based on a radius established about the endpoint of the leg of the multi-mode route with the second mode, a size of the radius based on a expected time period remaining before the first user approaches the endpoint of the leg of the multi-mode route with the second mode.

In Example 15, the subject matter of Example 14 includes, wherein the set of routes are ordered based on a distance between respective endpoints of members in the set of routes and the endpoint of the leg of the multi-mode route with the second mode.

In Example 16, the subject matter of Example 15 includes, wherein the distance is measured in a multidimensional space that includes time as a dimension.

In Example 17, the subject matter of Examples 11-16 includes, wherein modifying the route for the second user includes modifying graph weights of route options towards the endpoint of the leg of the multi-mode route with the second mode such that it is more likely the route options are taken.

In Example 18, the subject matter of Examples 11-17 includes, wherein modifying the route for the second user includes placing the conveyance at a point different than the endpoint of the leg of the multi-mode route with the second mode.

In Example 19, the subject matter of Example 18 includes, modifying or inserting a third leg of the multi-mode route, the third leg directing the first user from the endpoint the leg of the multi-mode route with the second mode to the point where the conveyance is; and communicating an update to the multi-mode route to the user, the update including the third leg.

Example 20 is at least one machine-readable medium including instructions that, when executed by processing circuitry, cause the processing circuitry to perform operations comprising: communicating a multi-mode route to a user, the multi-mode route starting with a first mode and including a leg with a second mode, the second mode being conveyances with a variable routing capability; a conveyance for the leg of the multi-mode route with the second mode by a continual procedure; and communicating to the user to use the conveyance for the leg of the multi-mode route with the second mode.

In Example 21, the subject matter of Example 20 includes, wherein conveyances of the second mode are one of an automobile, a human-powered vehicle, or aircraft.

In Example 22, the subject matter of Examples 20-21 includes, wherein the operations comprise communicating to the user to begin the multi-mode route before the conveyance is available.

In Example 23, the subject matter of Examples 20-22 includes, wherein the continual procedure includes iterations, an iteration of the iterations including: identifying a route for a second user using a conveyance of the second mode; and modifying the route for the second user based on an endpoint of the leg of the multi-mode route with the second mode.

In Example 24, the subject matter of Example 23 includes, wherein identifying the route for the second user includes: identifying a set of routes for other users based on a radius established about the endpoint of the leg of the multi-mode route with the second mode, a size of the radius based on a expected time period remaining before the user approaches the endpoint of the leg of the multi-mode route with the second mode.

In Example 25, the subject matter of Example 24 includes, wherein the set of routes are ordered based on a distance between respective endpoints of members in the set of routes and the endpoint of the leg of the multi-mode route with the second mode.

In Example 26, the subject matter of Example 25 includes, wherein the distance is measured in a multidimensional space that includes time as a dimension.

In Example 27, the subject matter of Examples 23-26 includes, wherein modifying the route for the second user includes modifying graph weights of route options towards the endpoint of the leg of the multi-mode route with the second mode such that it is more likely the route options are taken.

In Example 28, the subject matter of Examples 23-27 includes, wherein modifying the route for the second user includes placing the conveyance at a point different than the endpoint of the leg of the multi-mode route with the second mode.

In Example 29, the subject matter of Example 28 includes, wherein the operations comprise: modifying or inserting a third leg of the multi-mode route, the third leg directing the user from the endpoint the leg of the multi-mode route with the second mode to the point where the conveyance is; and communicating an update to the multi-mode route to the user, the update including the third leg.

Example 30 is a system for just-in-time transportation delivery, the system comprising: means for communicating a multi-mode route to a user, the multi-mode route starting with a first mode and including a leg with a second mode, the second mode being conveyances with a variable routing capability; means for securing a conveyance for the leg of the multi-mode route with the second mode by a continual procedure: means for identifying a route for a second user using a conveyance of the second mode; and means for modifying the route for the second user based on an endpoint of the leg of the multi-mode route with the second mode; and means for communicate to the user to use the conveyance for the leg of the multi-mode route with the second mode.

In Example 31, the subject matter of Example 30 includes, wherein conveyances of the second mode are one of an automobile, a human-powered vehicle, or aircraft.

In Example 32, the subject matter of Examples 30-31 includes, means for communicating to the user to begin the multi-mode route before the conveyance is available.

In Example 33, the subject matter of Examples 30-32 includes, wherein the continual procedure includes iterations, an iteration of the iterations including: identifying a route for a second user using a conveyance of the second mode; and modifying the route for the second user based on an endpoint of the leg of the multi-mode route with the second mode.

In Example 34, the subject matter of Example 33 includes, wherein the means for identifying the route for the second user include: means for identifying a set of routes for other users based on a radius established about the endpoint of the leg of the multi-mode route with the second mode, a size of the radius based on a expected time period remaining before the user approaches the endpoint of the leg of the multi-mode route with the second mode.

In Example 35, the subject matter of Example 34 includes, wherein the set of routes are ordered based on a distance between respective endpoints of members in the set of routes and the endpoint of the leg of the multi-mode route with the second mode.

In Example 36, the subject matter of Example 35 includes, wherein the distance is measured in a multidimensional space that includes time as a dimension.

In Example 37, the subject matter of Examples 33-36 includes, wherein the means for modifying the route for the second user include means for modifying graph weights of route options towards the endpoint of the leg of the multi-mode route with the second mode such that it is more likely the route options are taken.

In Example 38, the subject matter of Examples 33-37 includes, wherein the means for modifying the route for the second user include means for placing the conveyance at a point different than the endpoint of the leg of the multi-mode route with the second mode.

In Example 39, the subject matter of Example 38 includes, means for modifying or inserting a third leg of the multi-mode route, the third leg directing the user from the endpoint the leg of the multi-mode route with the second mode to the point where the conveyance is; and means for communicating an update to the multi-mode route to the user, the update including the third leg.

Example 40 is at least one machine-readable medium including instructions that, when executed by processing circuitry, cause the processing circuitry to perform operations to implement of any of Examples 1-39.

Example 41 is an apparatus comprising means to implement of any of Examples 1-39.

Example 42 is a system to implement of any of Examples 1-39.

Example 43 is a method to implement of any of Examples 1-39.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the embodiments should be determined with reference to the appended claims, along with the full scope of equivalents to which such claims are entitled.

## Claims

1. An apparatus for just-in-time transportation delivery, the apparatus comprising:
a memory including instructions; and
processing circuitry that, when in operations, is configured by the instructions to:
communicate a multi-mode route to a user, the multi-mode route starting with a first mode and including a leg with a second mode, the second mode being conveyances with a variable routing capability;
secure a conveyance for the leg of the multi-mode route with the second mode by a continual procedure; and
communicate to the user to use the conveyance for the leg of the multi-mode route with the second mode.

2. The apparatus of claim 1, wherein conveyances of the second mode are one of an automobile, a human-powered vehicle, or aircraft.

3. The apparatus of one of the previous claims, wherein the processing circuitry is configured to communicate to the user to begin the multi-mode route before the conveyance is available.

4. The apparatus of one of the previous claims, wherein the continual procedure includes iterations, an iteration of the iterations including:
identification of a route for a second user using a conveyance of the second mode; and
modification of the route for the second user based on an endpoint of the leg of the multi-mode route with the second mode.

5. The apparatus of claim 4, wherein identification of the route for the second user includes the processing circuitry configured to identify identifying a set of routes for other users based on a radius established about the endpoint of the leg of the multi-mode route with the second mode, a size of the radius based on a expected time period remaining before the user approaches the endpoint of the leg of the multi-mode route with the second mode.

6. The apparatus of claim 5, wherein the set of routes are ordered based on a distance between respective endpoints of members in the set of routes and the endpoint of the leg of the multi-mode route with the second mode.

7. The apparatus of claim 6, wherein the distance is measured in a multidimensional space that includes time as a dimension.

8. The apparatus of one of the claims 4-7, wherein modification of the route for the second user includes the processing circuitry configured to modify graph weights of route options towards the endpoint of the leg of the multi-mode route with the second mode such that it is more likely the route options are taken.

9. The apparatus of one of the claims 4-8, wherein modification of the route for the second user includes the processing circuitry configured to place the conveyance at a point different than the endpoint of the leg of the multi-mode route with the second mode.

10. The apparatus of claim 9, wherein the processing circuitry is configured to:
modify or insert a third leg of the multi-mode route, the third leg directing the user from the endpoint the leg of the multi-mode route with the second mode to the point where the conveyance is; and
communicate an update to the multi-mode route to the user, the update including the third leg.

11. At least one non-transitory machine-readable medium including instructions that, when executed by processing circuitry, cause the processing circuitry to perform operations comprising:
communicating a multi-mode route to a user, the multi-mode route starting with a first mode and including a leg with a second mode, the second mode being conveyances with a variable routing capability;
securing a conveyance for the leg of the multi-mode route with the second mode by a continual procedure; and
communicating to the user to use the conveyance for the leg of the multi-mode route with the second mode.

12. The at least one machine-readable medium of claim 11, wherein conveyances of the second mode are one of an automobile, a human-powered vehicle, or aircraft.

13. The at least one machine-readable medium of one of the claims 11-12, wherein the operations comprise communicating to the user to begin the multi-mode route before the conveyance is available.

14. The at least one machine-readable medium of one of the claims 11-13, wherein the continual procedure includes iterations, an iteration of the iterations including:
identifying a route for a second user using a conveyance of the second mode; and
modifying the route for the second user based on an endpoint of the leg of the multi-mode route with the second mode.

15. A system for just-in-time transportation delivery, the system comprising:
means for communicating a multi-mode route to a user, the multi-mode route starting with a first mode and including a leg with a second mode, the second mode being conveyances with a variable routing capability;
means for securing a conveyance for the leg of the multi-mode route with the second mode by a continual procedure; and
means for communicate to the user to use the conveyance for the leg of the multi-mode route with the second mode.
